# EUROPÄISCHE PATENTSCHRIFT

(11) **EP 1 732 777 B1**
(45) Veröffentlichungstag und Bekanntmachung des Hinweises auf die Patenterteilung: **27.07.2011**
(21) Anmeldenummer: 05716268.7
(22) Anmeldetag: 22.03.2005
(51) Int. Cl.: B60K 17/346, B60K 23/08, B60K 17/22

(54) **ANTRIEBSSTRANG FÜR EIN KRAFTFAHRZEUG**
DRIVE TRAIN FOR A MOTOR VEHICLE
ENSEMBLE TRANSMISSION CONÇU POUR UN VEHICULE AUTOMOBILE

(30) Priorität: 30.03.2004 DE 102004016642; 16.09.2004 DE 102004046009
(43) Veröffentlichungstag der Anmeldung: 20.12.2006
(73) Patentinhaber: Getrag Driveline Systems GmbH, 50735 Köln (DE)
(72) Erfinder: NETT, Hans-Peter, 53518 Adenau (DE); HAUPT, Jan, 50933 Köln (DE)
(74) Vertreter: Steil, Christian
(86) Internationale Anmeldenummer: PCT/EP2005/002999
(87) Internationale Veröffentlichungsnummer: WO 2005/097538

(56) Entgegenhaltungen:
- EP-A- 0 395 247
- DE-A1- 4 409 224
- US-A- 4 476 953
- US-A- 4 711 318
- US-A- 4 911 260
- US-A- 4 912 639
- US-A- 5 246 408
- US-A- 5 248 284
- US-A- 5 254 052
- US-A- 5 267 914
- US-A- 6 019 695
- US-A1- 2003 037 986
- PATENT ABSTRACTS OF JAPAN Bd. 015, Nr. 008 (M-1067), 9. Januar 1991 (1991-01-09) -& JP 02 258426 A (MAZDA MOTOR CORP), 19. Oktober 1990 (1990-10-19)
- PATENT ABSTRACTS OF JAPAN Bd. 014, Nr. 193 (M-0963), 19. April 1990 (1990-04-19) -& JP 02 037036 A (FUJI HEAVY IND LTD), 7. Februar 1990 (1990-02-07)

## Beschreibung

Die vorliegende Erfindung betrifft einen Antriebsstrang für ein Kraftfahrzeug, gemäβ dem Oberbegriff des Anspruchs 1.

Bei Kraftfahrzeugen wurde der Vierradantrieb ursprünglich nahezu ausschließlich bei geländegängigen Fahrzeugen verwendet. In den letzten Jahren sind jedoch auch Fahrzeuge, die überwiegend für den Straßenverkehr ausgelegt sind (wie beispielsweise Personenkraftwagen in Form von Limousinen, Kombis, SUVs) häufig mit Vierradantrieb ausgestattet worden, und zwar zur Erhöhung der Fahrsicherheit, insbesondere auch bei ungünstigen Traktionsverhältnissen.

Bei vierradgetriebenen Fahrzeugen unterscheidet man generell zwischen differentialgesteuerten Systemen und kupplungsgesteuerten Systemen. Bei differentialgesteuerten Systemen wird das Antriebsmoment von der Antriebseinheit mittels eines Differentials auf die Vorderachse und die Hinterachse aufgeteilt. Bei kupplungsgesteuerten Systemen ist generell nur eine Achse angetrieben und die andere Achse wird bei Bedarf angetrieben. Dabei kann im einfachsten Fall eine handgeschaltete Kupplung vorgesehen sein, die vom Fahrgastinnenraum aus betätigt wird. Moderne vierradgetriebene Fahrzeuge dieses Typs verwenden jedoch automatisiert betätigte Kupplungen (z.B. Haldex-Kupplungen), die die zweite Achse dann zuschalten, wenn sich zwischen den Achsen eine Differenzdrehzahl aufbaut oder aufgebaut hat. Diese Systeme werden auch als "Hang-On"-Systeme bezeichnet.

Bei differentialgesteuerten Systemen ist es bekannt, bei fehlender Traktion das Längsdifferential über eine Kupplung zu sperren, so dass Drehmoment zur Achse mit dem höheren Reibwert übertragen wird.

Bei kupplungsgesteuerten Systemen unterscheidet man zwischen Systemen mit Hang-On zur Hinterachse. Hierbei handelt es sich generell um vorderradgetriebene Fahrzeuge, wobei der Hinterachse bei fehlender Traktion an der Vorderachse Drehmoment zugeteilt wird.

Ein solcher Antriebsstrang wird beispielsweise in dem Audi TT verbaut. Hierbei ist im hinteren Bereich der Kardanwelle, vor dem Hinterachsdifferential, eine Reibkupplungsanordnung in Form einer Haldex-Kupplung vorgesehen, mit der bei Bedarf die Hinterachse zugeschaltet wird.

Umgekehrt sind auch Systeme bekannt, bei denen generell die Hinterachse angetrieben wird und die Vorderachse als Hang-On-Achse ausgebildet ist.

Unter einer Antriebseinheit wird im vorliegenden Zusammenhang eine Einheit zur Bereitstellung von Antriebsdrehmoment verstanden. Hierbei kann es sich um einen Motor wie bspw. einen Verbrennungsmotor oder einen Elektromotor handeln, entweder als solcher oder in Kombination mit einem Getriebe.

Das Getriebe kann eine handgeschaltetes Stufengetriebe sein, eine Wandlerautomat, ein Doppelkupplungsgetriebe, ein automatisiertes Schaltgetriebe, ein stufenloses Getriebe, etc.

Bei Verteilergetrieben für Kraftfahrzeuge mit Vierradantrieb ist eine Reihe von Konzepten bekannt.

Aus der DE 37 21 628 C2 ist es beispielsweise bekannt, koaxial zu der Vorderachse ein Querdifferential und ein Längsdifferential anzuordnen, die beide als Kegelraddifferential ausgebildet sind. Dabei ist ein Ausgang einer vorne quer eingebauten Antriebseinheit über eine Hohlwellenkonstruktion mit einem Eingangsglied des Längsdifferentials verbunden. Dieses wiederum ist am Außenumfang mit einem Tellerrad eines Winkelgetriebes verbunden, das eine Kardanwelle für die Hinterachse antreibt.

Aus der WO 02/28678 A1 ist es ferner bekannt, koaxial zur Vorderachse ein Längs- und ein Querdifferential vorzusehen, die jeweils als Planetenraddifferentiale ausgebildet sind. Die Planetenraddifferentiale sind dabei in einem Getriebegehäuse aufgenommen. Ein Gehäuse zur Aufnahme eines Winkelgetriebes für den Abtrieb zur Hinterachse ist seitlich an das Getriebegehäuse angeflanscht.

Aus der DE 103 13 386 A1 ist ein weiteres Verteilergetriebe für eine vorne quer eingebaute Antriebseinheit bekannt. Dabei ist ein als Planetengetriebe ausgebildetes Längsdifferential vorgesehen, dessen Ausgangsglied mit einem Zahnrad eines Hohlwellenstummels in Eingriff steht, der parallel zu der Vorderachse angeordnet ist. An einem anderen Ende des Hohlwellenstummels ist ein Kegelrad festgelegt, das eine Kardanwelle für die Hinterachse antreibt.

Bei den Hang-On-Systemen sind Schwingungen problematisch, die von der Reibkupplungsanordnung zum Zuschalten der bei Bedarf angetriebenen Achse ausgelöst werden. Die Verteilergetriebe sind zudem in der Regel spezielle Konstruktionen, die ausschließlich für einen bestimmten Antriebsstrang geeignet sind. Ein Antriebsstrang dieser Art ist aus der Druckschrift US 5267914 bekannt. Es ist vor diesem Hintergrund die Aufgabe der vorliegenden Erfindung, einen verbesserten Antriebsstrang für ein Kraftfahrzeug sowie ein verbessertes Verteilergetriebe anzugeben.

Diese Aufgabe wird bei dem eingangs genannten Antriebsstrang für ein Kraftfahrzeug durch die Merkmale des Kennzeichnenden Teils des Anspruchs 1 gelöst.

Bei dem eingangs genannten Verteilergetriebe wird die obige Aufgabe dadurch gelöst, dass das Gehäuse ein Grundgehäuse zur Aufnahme des Winkelgetriebes, einen in Seitenrichtung an das Gehäuse angeflanschten Gehäusedeckel zur Aufnahme der Reibkupplungsanordnung und ein Zwischengehäuse aufweist, das zwischen dem Grundgehäuse und dem Gehäusedeckel angeordnet ist und an dem der Kupplungsaktuator festgelegt ist.

Dieser Aktuator wird vorzugsweise fluidisch betrieben, z.B. hydraulisch oder pneumatisch, ist jedoch auch rein mechanisch betätigbar.

Bei dem erfindungsgemäßen Antriebsstrang ist die Reibkupplungsanordnung nun mit dem Winkelgetriebe integriert. Dies wirkt sich positiv auf die von der Reibkupplungsanordnung ausgelösten Schwingungen aus, da die anzuregende Masse sehr viel größer ist. Weiterhin liegen im Winkelgetriebe in der Regel deutlich niedrigere Drehzahlen vor, was sich positiv auf die anregenden Kräfte auswirkt.

Bei dem erfindungsgemäßen Verteilergetriebe ist vorteilhaft, dass die Reibkupplungsanordnung in einem in seitlicher Richtung angeflanschten Gehäusedeckel aufgenommen ist. Hierdurch ist auf vergleichsweise einfache Weise eine modulare Änderung des Verteilergetriebes möglich. Mit anderen Worten ist das Verteilergetriebe so aufgebaut, dass mit vielen Gleichteilen und wenig Änderungen mehrere Verteilergetriebevarianten realisierbar sind. Genauer gesagt können in dem Verteilergetriebe unterschiedliche Reibkupplungsanordnungen realisiert werden.

Demzufolge ist es in entsprechender Weise bevorzugt, wenn bei dem erfindungsgemäßen Antriebsstrang die Reibkupplungsanordnung in ein Gehäuse des Winkelgetriebes integriert ist.

Die Aufgabe wird somit vollkommen gelöst.

Bei dem erfindungsgemäßen Antriebsstrang ist es ferner vorteilhaft, wenn die Reibkupplungsanordnung auf einer Seite des Winkelgetriebes angeordnet ist, die der Seite gegenüberliegt, auf der das Ausgangsglied der Antriebseinheit angeordnet ist.

Hierdurch kann der im Bereich der Vorderachse zur Verfügung stehende Bauraum optimal ausgenutzt werden.

Von besonderem Vorteil ist es, wenn die Vorderachse ständig angetrieben ist.

Bei dieser Ausführungsform wird demzufolge die Hinterachse bei Bedarf als "Hang-On"-Achse zugeschaltet.

Hierbei ist es von besonderem Vorteil, wenn das Ausgangsglied der Antriebseinheit mit einem Eingangsglied eines Querdifferentialgetriebes verbunden ist, dessen Ausgangsglieder mit einer linken bzw. einer rechten Seitenwelle der Vorderachse verbunden sind.

Das Querdifferentialgetriebe kann dabei in dem Gehäuse eines Getriebes der Antriebseinheit integriert sein, kann jedoch auch in ein Gehäuse des Verteiler- bzw. Winkelgetriebes integriert sein.

Das Querdifferentialgetriebe ist dabei vorzugsweise als Kegelraddifferential ausgebildet, kann jedoch auch als Planetenraddifferential realisiert sein.

Ferner ist es hierbei vorteilhaft, wenn die Reibkupplungsanordnung als Zuschaltkupplung für die Hinterachse ausgebildet ist, wenn ferner das Eingangsglied des Querdifferentialgetriebes mit einer Hohlwellenanordnung verbunden ist, die mit einem Eingangsglied der Zuschaltkupplung verbunden ist, und wenn ein Ausgangsglied der Zuschaltkupplüng mit dem Winkelgetriebe verbunden ist.

Durch die Verbindung zwischen Querdifferentialgetriebe und Eingangsglied der Zuschaltkupplung über eine Hohlwellenanordnung kann der im Bereich der Vorderachse vorhandene Bauraum optimal ausgenutzt werden.

Dabei ist es von besonderem Vorteil, wenn die Zuschaltkupplung eine Lamellenkupplung ist und wenn das Eingangsglied der Zuschaltkupplung ein Außenlamellenträger ist.

Dies begünstigt eine Anordnung eines Hydraulikaktuators im Inneren eines Gehäuses des Winkelgetriebes.

Ferner ist es hierbei vorteilhaft, wenn die Zuschaltkupplung eine Lamellenkupplung ist und wenn das Ausgangsglied der Zuschaltkupplung ein Innenlamellenträger ist.

Dies ermöglicht eine günstige Anbindung des Winkelgetriebes an das Ausgangsglied (den Innenlamellenträger).

Ferner ist es vorteilhaft, wenn das Ausgangsglied der Zuschaltkupplung über eine weitere Hohlwellenanordnung mit dem Winkelgetriebe verbunden ist. Durch diese Maßnahme kann die Positionierung von Zuschaltkupplung und von Winkelgetriebe in Seitenrichtung so gewählt werden, dass der Bauraum optimal ausgenutzt wird. Ferner ist es möglich, dazwischen einen Kupplungsaktuator anzuordnen.

Von besonderem Vorteil ist es dabei, wenn die weitere Hohlwellenanordnung die erste Hohlwellenanordnung, die das Querdifferentialgetriebe und die Zuschaltkupplung verbindet, umschließt. Auf diese Weise kann an der weiteren Hohlwellenanordnung auf konstruktiv einfache Weise ein Tellerrad des Winkelgetriebes festgelegt werden.

Gemäß einer insgesamt bevorzugten Ausführungsform ist das Eingangsglied des Querdifferentialgetriebes ferner mit einer Hohlwellenanordnung verbunden, die mit einem Eingangsglied einer Quersperrkupplung verbunden ist, wobei ein Ausgangsglied der Quersperrkupplung mit einer der Seitenwellen der Vorderachse verbunden ist.

Bei dieser Ausführungsform ist in das Winkelgetriebe auf modulare Art und Weise eine zusätzliche Quersperrkupplung integriert.

Die Quersperrkupplung kann dabei vorzugsweise in dem Gehäuse des Winkelgetriebes integriert sein, vorzugsweise in dem Gehäusedeckel hiervon.

Von besonderem Vorteil ist es, wenn die Zuschaltkupplung und die Quersperrkupplung ein gemeinsames Eingangsglied aufweisen. Dieses kann insbesondere ein Außenlamellenträger für zwei benachbarte Lamellenkupplungen sein.

Ferner kann die Quersperrkupplung mittels eines Kupplungsaktuators betätigt sein, der in dem Gehäusedeckel gelagert ist.

Gemäß einer insgesamt bevorzugten, alternativen Ausführungsform des erfindungsgemäßen Antriebsstranges ist die Hinterachse ständig angetrieben.

Bei dieser Ausführungsform ist folglich die Vorderachse als "Hang-On"-Achse über eine Reibkupplungsanordnung zuschaltbar.

Von besonderem Vorteil ist es dabei, wenn das Ausgangsglied der Antriebseinheit über eine Hohlwellenanordnung mit dem Winkelgetriebe verbunden ist.

Hierdurch wird erreicht, dass Antriebsmoment von der Antriebseinheit direkt ständig an die Hinterachse abgegeben wird.

Ferner ist es vorteilhaft, wenn das Ausgangsglied der Antriebseinheit mit dem Eingangsglied der Reibkupplungsanordnung verbunden ist, die als Zuschaltkupplungsanordnung für die Vorderachse ausgebildet ist.

Dabei ist es generell möglich, dass die Zuschaltkupplungsanordnung für die Vorderachse auf ein Eingangsglied eines Vorderachsdifferentialgetriebes wirkt. Dies entspricht einem Hang-On-System für die Vorderachse.

Von besonderem Vorteil ist es jedoch, wenn die Zuschaltkupplungsanordnung durch zwei Seiten-Reibkupplungen gebildet ist, die unabhängig voneinander ansteuerbar sind, wobei die Ausgangsglieder der zwei Seiten-Reibkupplungen mit einer linken bzw. einer rechten Seitenwelle der Vorderachse verbunden sind.

Auf diese Weise ist es möglich, während einer Kurvenfahrt einem Vorderrad (vorzugsweise dem kurvenäußeren Vorderrad) ein größeres Drehmoment als dem anderen Vorderrad zuzuteilen. Dies ermöglicht es, das Giermoment um die Fahrzeughochachse zu beeinflussen, insbesondere, um bei sportlicher Kurvenfahrt ein untersteuerndes Fahrverhalten zu verhindern.

Dabei ist es von besonderem Vorteil, wenn die Seiten-Reibkupplungen als Lamellenkupplungen ausgebildet sind und wenn deren gemeinsames Eingangsglied durch einen Außenlamellenträger gebildet ist.

Dies ermöglicht es auf vergleichsweise einfache Weise, die jeweiligen Innenlamellenträger mit der linken bzw. rechten Seitenwelle der Vorderachse zu verbinden.

Der Begriff Reibkupplung ist im vorliegenden Zusammenhang breit zu verstehen. Es kann sich z.B. um Trockenreibkupplungen handeln und besonders bevorzugt sind jedoch nass laufende Lamellenkupplungen. Der Begriff Reibkupplung soll jedoch auch alternative Kupplungssysteme beinhalten, wie beispielsweise Magnetpulverkupplungen.

Ausführungsbeispiele der Erfindung sind in der Zeichnung dargestellt und werden in der nachfolgenden Beschreibung näher erläutert. Es zeigen:
- Fig. 1: eine schematische Draufsicht auf einen Antriebsstrang gemäß einer ersten Ausführungsform der vorliegenden Erfindung;
- Fig. 2: eine Draufsicht auf einen vorderen Teil eines An- triebsstranges gemäß einer weiteren Ausführungsform der vorliegenden Erfindung;
- Fig. 3: eine Draufsicht auf einen vorderen Teil eines An- triebsstranges gemäß einer weiteren Ausführungsform der vorliegenden Erfindung;
- Fig. 4: eine Schnittansicht durch ein konstruktives Ausfüh- rungsbeispiel eines Verteilergetriebe des Antriebs- stranges der Fig. 1;
- Fig. 5: eine der Fig. 4 entsprechenden Teilansicht eines Schnittes durch ein konstruktives Ausführungsbeispiel eines Verteilergetriebes des Antriebsstranges der Fig. 2; und
- Fig. 6: eine Schnittansicht durch ein konstruktives Ausfüh- rungsbeispiel eines Verteilergetriebe des Antriebs- stranges der Fig. 3.

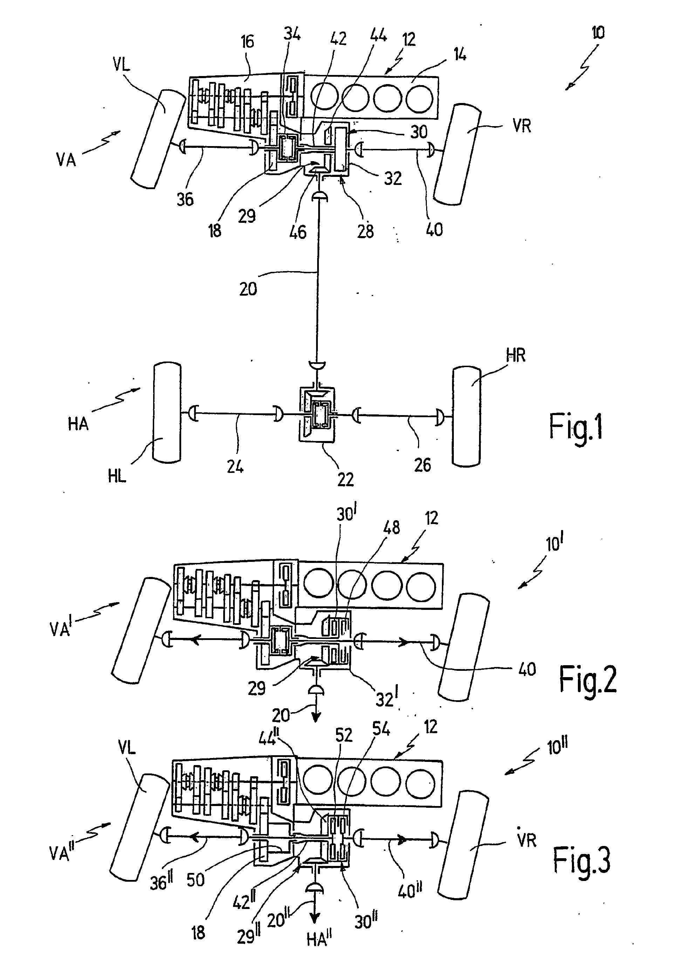

In Fig. 1 ist eine erste Ausführungsform des erfindungsgemäßen Antriebsstranges generell mit 10'bezeichnet.

Der Antriebsstrang 10 ist in einem Kraftfahrzeug, genauer einem Personenkraftwagen mit zwei angetriebenen Achsen realisiert.

Das Kraftfahrzeug weist eine Vorderachse VA und eine Hinterachse HA auf. Das linke und das rechte Vorderrad der Vorderachse VA sind mit VL bzw. VR bezeichnet. Die Hinterräder der Hinterachse HA sind mit HL bzw. HR bezeichnet.

Der Antriebsstrang 10 weist eine Antriebseinheit 12 auf, die im Bereich der Vorderachse VA quer eingebaut ist.

Die Antriebseinheit 12 weist einen Motor 14, beispielsweise einen Verbrennungsmotor, und ein Getriebe 16, beispielsweise ein Handschaltgetriebe, ein Doppelkupplungsgetriebe, ein automatisiertes Schaltgetriebe, ein stufenloses Getriebe, ein Automatikgetriebe, etc., auf.

Ein Ausgang 18 der Antriebseinheit 12 ist in Form eines "Final drive" Radsatzes realisiert, mit einem ersten Zahnrad, das mit einer Ausgangswelle des Getriebes 16 verbunden ist, und einem hiermit kämmenden Zahnrad, das koaxial zu der Vorderachse angeordnet ist.

Der Antriebsstrang 10 weist eine Kardanwelle (Abtriebswelle) 20 auf, die die Vorderachse VA mit einem Hinterachsdifferential, genauer einem Kegelraddifferential 22 verbindet.

Die Ausgangsglieder des Kegelraddifferentials 22 sind mit einer Antriebswelle 24 für das linke Hinterrad HL bzw. einer Antriebswelle 26 für das rechte Hinterrad HR verbunden.

Im Bereich der Vorderachse VA ist zum Zwecke der Verteilung des Antriebsmomentes der Antriebseinheit 12 ein Verteilergetriebe 28 vorgesehen. Das Verteilergetriebe 28 beinhaltet ein Winkelgetriebe 29, das zum Antrieb der Kardanwelle 20 dient.

Ferner beinhaltet das Verteilergetriebe 28 eine Reibkupplungsanordnung 30, die dazu dient, das Antriebsmoment der Antriebseinheit 12 bei Bedarf an die Hinterachse HA zu leiten.

Das Verteilergetriebe 28 weist ein Gehäuse 32 auf, das seitlich an ein Gehäuse des Getriebes 16 angeflanscht ist.

Der Ausgang 18 der Antriebseinheit 12 ist mit einem Vorderachsdifferentialgetriebe 34 verbunden. Das Vorderachsdifferentialgetriebe 34 ist koaxial zu der Vorderachse VA angeordnet, und dessen Ausgangsglieder sind mit einer Antriebswelle 36 für das linke Vorderrad VL bzw. einer Antriebswelle 40 für das rechte Vorderrad VR verbunden. Genauer gesagt ist das Vorderachsdifferentialgetriebe 34 als Kegelraddifferentialgetriebe ausgebildet und ist unmittelbar benachbart zu dem Ausgang 18 angeordnet, im dargestellten Ausführungsbeispiel innerhalb des Getriebegehäuses.

Das Eingangsglied des Vorderachsdifferentialgetriebes 34 ist zudem über eine Hohlwellenanordnung 42 mit einem Eingangsglied der Reibkupplungsanordnung 30 verbunden. Die Reibkupplungsanordnung 30 ist in Bezug auf das Winkelgetriebe 29 so angeordnet, dass sie dem Ausgang 18 bzw. dem Vorderachsdifferentialgetriebe 34 gegenüberliegt. Die Hohlwellenanordnung 42 durchsetzt dabei das Winkelgetriebe 29 und ist koaxial zu der Antriebswelle 40 für das rechte Vorderrad VR angeordnet.

Ein Ausgangsglied der Reibkupplungsanordnung 30 ist mit einem Tellerrad 44 des Winkelgetriebes 29 verbunden. Das Tellerrad 44 ist koaxial zu der Vorderachse VA vorgesehen und steht in Eingriff mit einem Kegelrad 46 der Kardanwelle 20.

Mit dem Antriebsstrang 10 wird die Vorderachse VA über das Vorderachsdifferentialgetriebe 34 ständig angetrieben.

Die Hinterachse HA wird bei Bedarf zugeschaltet, und zwar über die Reibkupplungsanordnung 30. Das Zuschalten der Hinterachse HA erfolgt mittels an sich bekannter Steuer- bzw. Regelalgorithmen, die beispielsweise die Drehzahlen der Achsen VA, HA überwachen und die Hinterachse HA zuschalten, wenn an der Vorderachse keine hinreichende Traktion erzielbar ist.

Aus Gründen einer übersichtlicheren Darstellung wird auf die Details dieser Regelalgorithmen vorliegend nicht eingegangen.

Durch die Maßnahme, die Reibkupplungsanordnung im Bereich der Vorderachse anzuordnen, insbesondere mit dem Winkelgetriebe 29 integriert auszuführen, werden diverse Vorteile erzielt. So ist es zum Einen nicht notwendig, für die Reibkupplungsanordnung 30 ein separates Gehäuse vorzusehen. Das Hinterachsdifferentialgetriebe 22 kann als herkömmliches Hinterachsdifferentialgetriebe ausgeführt sein. Ferner ist die mittels der Reibkupplungsanordnung 30 angeregte Masse größer, so dass die Gefahr des Aufbaus von Schwingungen geringer ist. Zudem liegen im Bereich des Winkelgetriebes 29 (bzw. von dessen Eingang) deutlich kleinere Drehzahlen vor als im Bereich der Kardanwelle 20, so dass die Reibkupplungsanordnung 30 mit kleineren Differenzdrehzahlen arbeiten kann und somit die Unwuchtproblematik deutlich verringert wird.

Zudem ist es durch die Anordnung der Reibkupplungsanordnung 30 an einem axial dem Ausgang 18 gegenüberliegenden Ende möglich, den Antriebsstrang, und insbesondere dessen Verteilergetriebe 28, modular zu erweitern.

Ein Beispiel hierfür ist in Fig. 2 gezeigt. Fig. 2 zeigt eine alternative Ausführungsform eines erfindungsgemäßen Antriebsstranges, die generell mit 10' bezeichnet ist. Der Antriebsstrang 10' ist hinsichtlich Aufbau und Funktion identisch zu dem Antriebsstrang der Fig. 1. Im Folgenden wird lediglich auf Unterschiede eingegangen. Gleiche Elemente sind mit gleichen Bezugsziffern versehen.

Zusätzlich zu der Reibkupplungsanordnung 30' weist der Antriebsstrang 10' eine Quersperrkupplung 48 auf, die auf die Vorderachse VA wirkt (Vorderachsdifferential).

Die Quersperrkupplung 48 ist seitlich neben der Reibkupplungsanordnung 30' angeordnet. Demzufolge ist es möglich, trotz der zusätzlichen Aufnahme einer solchen Quersperrkupplung 48 wesentliche Bauteile und Baugruppen identisch zu belassen. Somit lässt sich die Quersperrkupplung 48 auf einfache Weise als Zubehör bzw. optionale Ausstattung des Kraftfahrzeuges anbieten. Die Quersperrkupplung 48 ist dabei zwischen das Eingangsglied der Reibkupplung 30' und die rechte Antriebswelle 40' geschaltet. Genauer gesagt teilen sich Reibkupplungsanordnung 30' und die Quersperrkupplung 48 ein gemeinsames Eingangsglied in Form eines Außenlamellenträgers.

Fig. 3 zeigt eine weitere alternative Ausführungsform eines erfindungsgemäßen Antriebsstranges, der dort generell mit 10" bezeichnet ist.

Der Antriebsstrang 10" ist in vieler Hinsicht identisch zu dem Antriebsstrang 10 der Fig. 1. Daher wird in Bezug auf dessen Aufbau und Funktion generell auf die Beschreibung des Antriebsstranges 10 Bezug genommen.

Der Antriebsstrang 10" unterscheidet sich jedoch grundlegend von dem Antriebsstrang 10 der Fig. 1, da bei dem Antriebsstrang 10" die Hinterachse HA" ständig angetrieben ist und die Vorderachse VA" bei Bedarf zugeschaltet wird.

Die Hinterachse HA" ist generell identisch aufgebaut wie die Hinterachse HA des Antriebsstrangs 10 der Fig. 1.

Im Bereich der Vorderachse VA" ist der Ausgang 18 der Antriebseinheit 12 mit einem Hohlwellenabschnitt 50 verbunden. Der Hohlwellenabschnitt 50 überbrückt innerhalb des Getriebegehäuses einen Raum, der ansonsten von einem Vorderachsendifferential eingenommen wird. Der Hohlwellenabschnitt 50 ist dabei drehfest mit der Hohlwellenanordnung 42" verbunden. Die Hohlwellenanordnung 42" ist drehfest mit dem Tellerrad 44" des Winkelgetriebes 29" verbunden, so dass die Hinterachse HA" über die Kardanwelle 20" von der Antriebseinheit 12 ständig mit Antriebsmoment versorgt wird.

Zum Zuschalten der Vorderachse VA" bei Bedarf ist eine Reibkupplungsanordnung 30" vorgesehen, die eine linke Seiten-Reibkupplung 52 und eine rechte Seiten-Reibkupplung 54 aufweist.

Die Seiten-Reibkupplungen 52, 54 weisen ein gemeinsames Eingangsglied auf, das in der dargestellten Ausführungsform mit dem Tellerrad 44" des Winkelgetriebes 29" verbunden ist. Es ist jedoch auch möglich, das Eingangsglied der Seiten-Reibkupplungen 52, 54 auf andere Weise ständig mit dem Ausgang 18 der Antriebseinheit 12 zu verbinden.

Ein Ausgangsglied der linken Seiten-Reibkupplung 52 ist mit der linken Antriebswelle 36" für das linke Vorderrad VL verbunden. Ein Ausgangsglied der rechten Seiten-Reibkupplung 54 ist in entsprechender Weise mit der rechten Antriebswelle 40" für das rechte Vorderrad VR verbunden.

Die Seiten-Reibkupplungen 52, 54 sind unabhängig voneinander ansteuerbar. Demzufolge kann Antriebsmoment auf die Vorderräder VL, VR individuell übertragen werden.

Beispielsweise kann bei einer Kurvenfahrt das kurvenäußere Vorderrad mit mehr Antriebsmoment versorgt werden, als das kurveninnere Rad, um ein Untersteuern zu verhindern.

Um ein Übersteuern, beispielsweise bei einem Lastwechsel während einer Kurvenfahrt zu verhindern, können beide Seiten-Reibkupplungen 52, 54 gleichermaßen angesteuert werden, oder es kann das kurveninnere Vorderrad mit einem größeren Antriebsmoment versorgt werden.

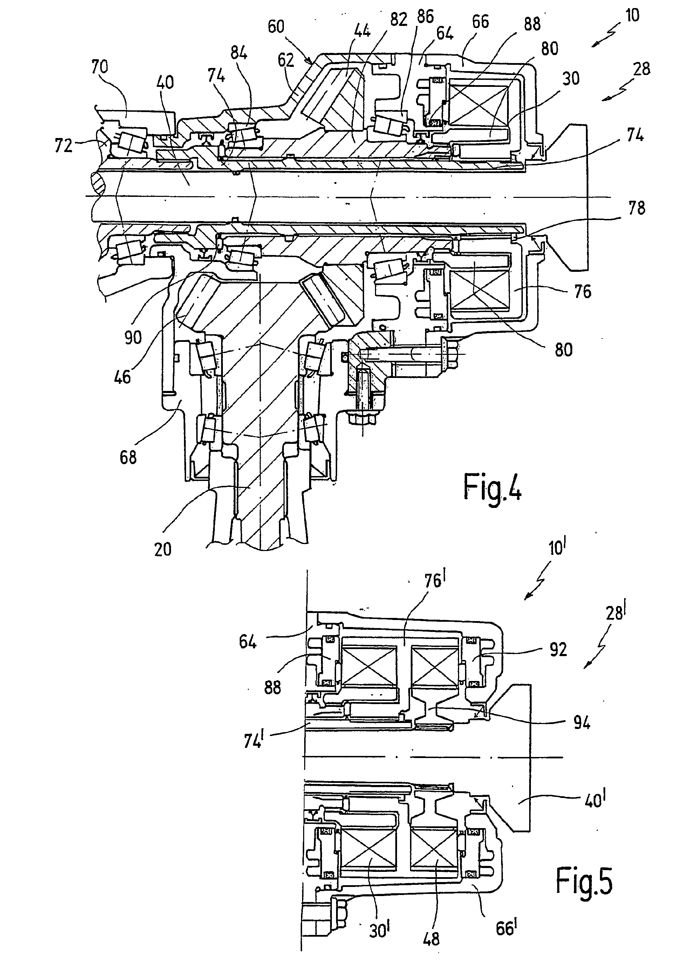

Fig. 4 zeigt eine konstruktive Realisierung des Verteilergetriebes 28 des Antriebsstranges 10 der Fig. 1.

Das Verteilergetriebe 28 weist ein Gehäuse 60 auf, das seitlich an ein Getriebegehäuse 70 angeflanscht ist.

Genauer gesagt weist das Gehäuse 60 ein Grundgehäuse 62 auf, das im Wesentlichen das Winkelgetriebe 29 aufnimmt. Ferner weist das Gehäuse 60 einen Gehäusedeckel 66 und ein Zwischengehäuse 64 auf, das zwischen dem Grundgehäuse 62 und dem Gehäusedeckel 66 angeordnet ist.

Ferner weist das Gehäuse 60 ein Kardanwellengehäuse 68 auf, an dem die Kardanwelle 20 mittels zweier Wälzlager (vorzugsweise in O-Anordnung) gelagert ist.

Das Grundgehäuse 62 ist an dem Getriebegehäuse 70 angebracht. Ein Hohlwellenabschnitt 72, der mit dem Vorderachsdifferential 34 und mit dem Ausgang 18 verbunden ist (hier nicht dargestellt), erstreckt sich bis zu dem Grundgehäuse 62. Innerhalb des Grundgehäuses 62 ist ein zweiter Hohlwellenabschnitt 74 gelagert, der drehfest mit dem ersten Hohlwellenabschnitt 72 verbunden ist, beispielsweise mittels einer Verzahnung oder Ähnlichem. Der erste Hohlwellenabschnitt 72 und der zweite Hohlwellenabschnitt 74 bilden die Hohlwellenanordnung 42.

Der zweite Hohlwellenabschnitt 74 erstreckt sich koaxial zu der Antriebswelle 40 für das rechte Vorderrad, und zwar bis durch den Gehäusedeckel 66 hindurch. Im Bereich des Gehäusedeckels 66 ist der zweite Hohlwellenabschnitt 74 mit einem Außenlamellenträger 76 der Reibkupplungsanordnung 30 verbunden. Der Außenlamellenträger erstreckt sich dabei radial benachbart zu dem Gehäusedeckel 66 und ist radial außen in Richtung hin zu dem Zwischengehäuse 64 gerichtet.

Der Außenlamellenträger 76 ist an dem zweiten Hohlwellenabschnitt 74 mittels einer Axialsicherung 78 festgelegt.

Ein Innenlamellenträger 80 der Reibkupplungsanordnung 30 ist mit einer Trägerhülse 82 verbunden, die sich durch das Zwischengehäuse 64 hindurch in das Grundgehäuse 62 hinein erstreckt.

Die Trägerhülse 82 ist als eine weitere Hohlwelle ausgebildet und ist mittels eines ersten Lagers 84 und eines zweiten Lagers 86 an dem Grundgehäuse 62 bzw. an dem Zwischengehäuse 64 drehbar gelagert. Da die Trägerhülse 82 koaxial zu dem zweiten Hohlwellenabschnitt 74 angeordnet ist, dienen die Lager 84, 86 auch zur Lagerung des zweiten Hohlwellenabschnittes 74.

Das Tellerrad 44 des Winkelgetriebes 29 ist drehfest an der Trägerhülse 82 festgelegt.

In dem Zwischengehäuse 64 ist ein erster Kupplungsaktuator 88 in Form eines Hydraulikaktuators angeordnet, der dazu ausgelegt ist, die Reibkupplungsanordnung 30 zu betätigen. Der Kupplungsaktuator 88 wirkt dabei in einer Richtung seitlich nach außen, in Richtung hin zu dem Gehäusedeckel 66.

Bei einer Betätigung des Kupplungsaktuators 88 stützt sich der Außenlamellenträger 76 über die Axialsicherung 78 an dem zweiten Hohlwellenabschnitt 74 ab.

Der zweite Hohlwellenabschnitt 74 stützt sich in axialer Richtung über ein Nadellager 90 an der Trägerhülse 82 ab, die über die zwei Lager 84, 86 axial gelagert ist.

Auf diese Weise können die in der Reibkupplungsanordnung 30 ausgeübten axialen Kräfte von der Lagerung des Tellerrades 44 aufgenommen werden.

Fig. 5 zeigt eine konstruktive Realisierung des Antriebsstranges 10' der Figur 2, wobei aus Gründen einer übersichtlicheren Darstellung lediglich die Unterschiede zu dem Verteilergetriebe 28 der Fig. 4 dargestellt sind.

Es ist zu erkennen, dass der Außenlamellenträger 76' des Verteilergetriebes 28' sich im radial äußeren Bereich nicht nur hin zu dem Zwischengehäuse 64 erstreckt, sondern ferner auch hin zu dem Gehäusedeckel 66'.

Der Gehäusedeckel 66' ist verlängert ausgebildet und nimmt nicht nur die Reibkupplungsanordnung 30' sondern auch die Quersperrkupplung 48 des Vorderachsdifferentials 34 auf. In dem Gehäusedeckel 66' ist zudem ein zweiter Kupplungsaktuator 92 zum Betätigen der Quersperrkupplung 48 angeordnet.

Ein Innenlamellenträger 94 der Quersperrkupplung 48 ist drehfest mit der Antriebswelle 40' verbunden.

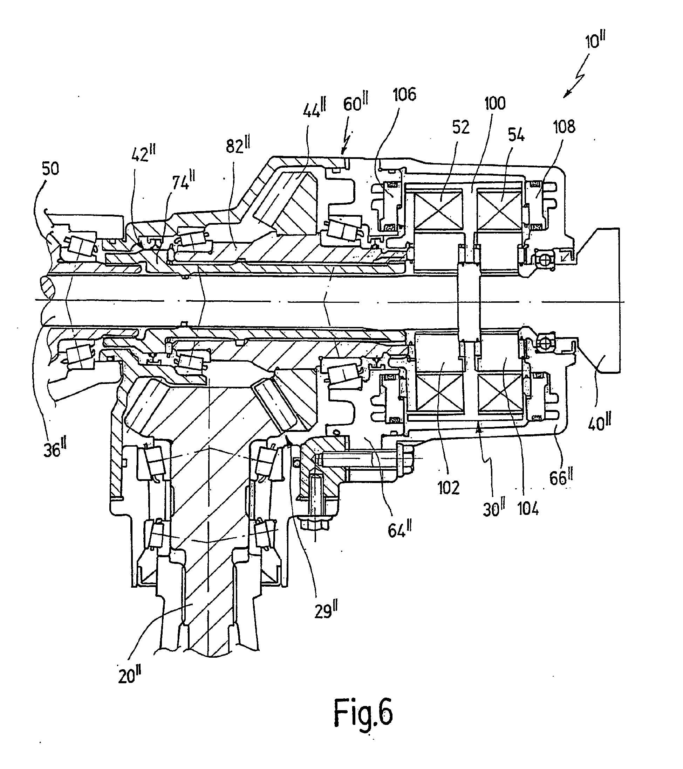

In Fig. 6 ist eine konstruktive Realisierung des Antriebsstranges 10" der Figur 3 dargestellt.

Man erkennt, dass der zweite Hohlwellenabschnitt 74" drehfest mit der Trägerhülse 82" für das Tellerrad 44" verbunden ist, so dass die Hinterachse HA" ständig angetrieben ist.

Ferner ist ein Außenlamellenträger 100 der Reibkupplungsanordnung 30" drehfest mit der Trägerhülse 82" verbunden.

Ein Innenlamellenträger 102 der linken Seiten-Reibkupplung 52 ist mit der Antriebswelle 36" verbunden. Ein Innenlamellenträger 104 der rechten Seiten-Reibkupplung 54 ist mit der Antriebswelle 40" verbunden.

In dem Zwischengehäuse 64" ist ein erster Kupplungsaktuator 106 zum Betätigen der linken Seiten-Reibkupplung 52 vorgesehen. In dem Gehäusedeckel 66" ist ein zweiter Hydraulikaktuator 108 zum Betätigen der rechten Seiten-Reibkupplung 54 angeordnet.

Man erkennt, dass die konstruktiven Ausführungsformen der drei Antriebsstränge 10, 10', 10" der Fig. 4 bis 6 in vieler Hinsicht identisch sind und auf viele Gleichteile zurückgreifen können, obgleich funktional unterschiedliche Antriebsstränge realisierbar sind.

Es kann auf technisch einfache Weise ein modulares Verteilergetriebe mit integriertem Winkelgetriebe und Reibkupplungsanordnung realisiert werden.

## Patentansprüche

1. Antriebsstrang (10) für ein Kraftfahrzeug, das eine Vorderachse (VA) und eine Hinterachse (HA) aufweist, von denen eine ständig und die andere bei Bedarf angetrieben ist, mit:
- einer Antriebseinheit (12), die vorne quer in dem Kraftfahrzeug eingebaut ist und über ein Ausgangsglied (18) Antriebsmoment bereitstellt, wobei das Ausgangsglied (18) mit der ständig angetriebenen Achse verbunden ist,
- einem Winkelgetriebe (29), das im Bereich der Vorderachse (VA) angeordnet ist und mit einer Kardanwelle (20) verbunden ist, die dazu dient, Antriebsmoment zu der Hinterachse (HA) zu übertragen,
- einer Kupplungsanordnung (30) zum Zuschalten der bei Bedarf angetriebenen Achse, und
- die Kupplungsanordnung (30) mit dem Winkelgetriebe (28, 29) im Bereich der Vorderachse (VA) integriert ist,
**dadurch gekennzeichnet, dass** die Kapplungsanordnung (30) als eine Reibkupplungsanordnung (30) ausgebildet ist, und dass
die Reibkupplungsanordnung (30) in ein Gehäuse (60) des Winkelgetriebes (28, 29) integriert ist.

2. Antriebsstrang nach Anspruch 1, **dadurch gekennzeichnet, dass** die Reibkupplungsanordnung (30) auf einer Seite des Winkelgetriebes (28, 29) angeordnet ist, die der Seite gegenüberliegt, auf der das Ausgangsglied (18) der Antriebseinheit (12) angeordnet ist.

3. Antriebsstrang nach einem der Ansprüche 1 - 2, **dadurch gekennzeichnet, dass** die Vorderachse (VA; VA') ständig angetrieben ist.

4. Antriebsstrang nach Anspruch 3, **dadurch gekennzeichnet, dass** das Ausgangsglied (18) der Antriebseinheit (12) mit einem Eingangsglied eines Querdifferentialgetriebes (34) verbunden ist, dessen Ausgangsglieder mit einer linken bzw. einer rechten Seitenwelle (36, 40) der Vorderachse (VA) verbunden sind.

5. Antriebsstrang nach Anspruch 4, **dadurch gekennzeichnet, dass** die Reibkupplungsanordnung (30; 30') als Zuschaltkupplung (30; 30') für die Hinterachse (HA) ausgebildet ist, dass das Eingangsglied des Querdifferentialgetriebes (34) ferner mit einer Hohlwellenanordnung (42) verbunden ist, die mit einem Eingangsglied (76) der Zuschaltkupplung (30; 30') verbunden ist, und dass ein Ausgangsglied (80) der Zuschaltkupplung (30; 30') mit dem Winkelgetriebe (28, 29) verbunden ist.

6. Antriebsstrang nach Anspruch 5; **dadurch gekennzeichnet, dass** die Zuschaltkupplung (30; 30') eine Lamellenkupplung ist und dass das Eingangsglied (76) der Zuschaltkuppluhg (30; 30') ein Außenlamellenträger (76) ist.

7. Antriebsstrang nach Anspruch 5 oder 6, **dadurch gekennzeichnet, dass** die Zuschaltkupplung (30; 30') eine Lamellenkupplung ist und dass das Ausgangsglied (80) der Zuschaltkupplung (30; 30') ein Innenlamellenträger (80) ist.

8. Antriebsstrang nach einem der Ansprüche 5-7, **dadurch gekennzeichnet, dass** das Ausgangsglied (80) der Zuschaltkupplung (30; 30') über eine weitere Hohlwellenanordnung (82) mit dem Winkelgetriebe (28, 29) verbunden ist.

9. Antriebsstrang nach einem der Ansprüche 4-8, **dadurch gekennzeichnet, dass** Eingangsglied des Querdifferentialgetriebes ferner mit einer Hohlwellenanordnung (74') verbunden ist, die mit einem Eingangsglied (76') einer Quersperrkupplung (48) verbunden ist, und dass ein Ausgangsglied (90) der Quersperrkupplung (48) mit einer (40') der Seitenwellen der Vorderachse (VA) verbunden ist.

10. Antriebsstrang nach Anspruch 5 und 9, **dadurch gekennzeichnet, dass** die Zuschaltkupplung (30') und die Quersperrkupplung (48) ein gemeinsames Eingangsglied (76') aufweisen.

11. Antriebsstrang nach einem der Ansprüche 1 - 2, **dadurch gekennzeichnet, dass** die Hinterachse (HA") ständig angetrieben ist.

12. Antriebsstrang nach Anspruch 11, **dadurch gekennzeichnet, dass** das Ausgangsglied (18) der Antriebseinheit (12) über eine Hohlwellenanordnung (42") mit dem Winkelgetriebe (29") verbunden ist.

13. Antriebsstrang nach Anspruch 12, **dadurch gekennzeichnet, dass** das Ausgangsglied (18) der Antriebseinheit (12) mit einem Eingangsglied der Reibkupplungsanordnung (30") verbunden ist, die als Zuschaltkupplungsanordnung (30") für die Vorderachse (VA) ausgebildet ist.

14. Antriebsstrang nach Anspruch 13 **dadurch gekennzeichnet, dass** die Zuschaltkupplungsanordnung (30") durch zwei Seiten-Reibkupplungen (52, 54) gebildet ist, die unabhängig voneinander ansteuerbar sind, wobei die Ausgangsglieder (102, 104) der zwei Seiten-Reibkupplungen (52, 54) mit einer linken bzw. einer rechten Seitenwelle (36", 40") der Vorderachse (VA") verbunden sind.

15. Antriebsstrang nach Anspruch 14, **dadurch gekennzeichnet, dass** die Seiten-Reibkupplungen (52, 54) als Lamellenkupplungen (52, 54) ausgebildet sind und dass deren gemeinsames Eingangsglied (100) durch einen Außenlamellenträger (100) gebildet ist.

## Claims

1. A drive train (10) for a motor vehicle, which has a front axle (VA) and a rear axle (HA), of which one is driven constantly and the other is driven as required, with:
- a drive unit (12) which is installed in the motor vehicle transversely at the front and provides drive torque via an output member (18), the output member (18) being connected to the constantly driven axle,
- an angular gear (29) which is arranged in the region of the front axle (VA) and is connected to a cardan shaft (20) which serves for transferring drive torque to the rear axle (HA), and
- a clutch arrangement (30) for cutting in the axle driven as required, wherein the clutch arrangement (30) is integrated with the angular gear (28, 29) in the region of the front axle (VA),
**characterized in that**
the clutch arrangement (30) is formed as a friction clutch arrangement (30), and **in that**
the friction clutch arrangement (30) is integrated into a casing (60) of the angular gear (28, 29).

2. The drive train as claimed in claim 1, **characterized in that** the friction clutch arrangement (30) is arranged on a side of the angular gear (28, 29) which lies opposite the side on which the output member (18) of the drive unit (12) is arranged.

3. The drive train as claimed in one of claims 1 - 2, **characterized in that** the front axle (VA; VA') is driven constantly.

4. The drive train as claimed in claim 3, **characterized in that** the output member (18) of the drive unit (12) is connected to an input member of a transverse differential gear (34), the output members of which are connected respectively to a left and a right side shaft (36, 40) of the front axle (VA).

5. The drive train as claimed in claim 4, **characterized in that** the friction clutch arrangement (30; 30') is designed as a cut-in clutch (30; 30') for the rear axle (HA), **in that** the input member of the transverse differential gear (34) is connected, furthermore, to a hollow-shaft arrangement (42) which is connected to an input member (76) of the cut-in clutch (30; 30'), and **in that** an output member (80) of the cut-in clutch (30; 30') is connected to the angular gear (28, 29).

6. The drive train as claimed in claim 5, **characterized in that** the cut-in clutch (30; 30') is a lamellar clutch, and **in that** the input member (76) of the cut-in clutch (30; 30') is an outer lamellar carrier (76).

7. The drive train as claimed in claim 5 or 6, **characterized in that** the cut-in clutch (30; 30') is a lamellar clutch, and **in that** the output member (80) of the cut-in clutch (30; 30') is an inner lamellar carrier (80).

8. The drive train as claimed in one of claims 5 - 7, **characterized in that** the output member (80) of the cut-in clutch (30; 30') is connected to the angular gear (28, 29) via a further hollow-shaft arrangement (82).

9. The drive train as claimed in one of claims 4 - 8, **characterized in that** the input member of the transverse differential gear is connected, furthermore, to a hollow-shaft arrangement (74') which is connected to an input member (76') of a transverse blocking clutch (48), and **in that** an output member (90) of the transverse blocking clutch (48) is connected to one (40') of the side shafts of the front axle (VA).

10. The drive train as claimed in claim 5 and 9, **characterized in that** the cut-in clutch (30') and the transverse blocking clutch (48) have a common input member (76').

11. The drive train as claimed in one of claims 1 - 2, **characterized in that** the rear axle (HA") is driven constantly.

12. The drive train as claimed in claim 11, **characterized in that** the output member (18) of the drive unit (12) is connected to the angular gear (29") via a hollow-shaft arrangement (42").

13. The drive train as claimed in claim 12, **characterized in that** the output member (18) of the drive unit (12) is connected to an input member of the friction clutch arrangement (30") which is designed as a cut-in clutch arrangement (30") for the front axle (VA).

14. The drive train as claimed in claim 13, **characterized in that** the cut-in clutch arrangement (30") is formed by two side friction clutches (52, 54) which can be activated independently of one another, the output members (102, 104) of the two side friction clutches (52, 54) being connected respectively to a left and a right side shaft (36", 40") of the front axle (VA").

15. The drive train as claimed in claim 14, **characterized in that** the side friction clutches (52, 54) are designed as lamellar clutches (52, 54), and **in that** their common input member (100) is formed by an outer lamellar carrier (100).

## Revendications

1. Branche cinématique (10) pour un véhicule automobile, qui présente un essieu avant (VA) et un essieu arrière (HA), dont l'un est entraîné constamment et l'autre est entraîné si nécessaire, comprenant:
- une unité d'entraînement (12), qui est intégrée à l'avant transversalement dans le véhicule et met à disposition le couple d'entraînement au moyen d'un élément de sortie (18), l'élément de sortie (18) étant relié à l'essieu entraîné constamment,
- un engrenage angulaire (29), qui est disposé dans la zone de l'essieu avant (VA) et est relié à un arbre à cardan (20), qui sert à transmettre le couple d'entraînement à l'essieu arrière (HA),
- un agencement d'accouplement (30) pour la mise en circuit de l'essieu entraîné si nécessaire, et
- l'agencement d'accouplement (30) est intégré avec l'engrenage angulaire (28, 29) dans la zone de l'essieu avant (VA),
**caractérisée en ce que**
l'agencement d'accouplement (30) est conçu sous forme d'un agencement d'accouplement à frottement (30) et **en ce que** l'agencement d'accouplement à frottement (30) est intégré dans un boîtier (60) de l'engrenage angulaire (28, 29).

2. Branche cinématique selon la revendication 1, **caractérisée en ce que** l'agencement d'accouplement à frottement (30) est disposé sur un côté de l'engrenage angulaire (28, 29) qui fait face au côté sur lequel est disposé l'élément de sortie (18) de l'unité d'entraînement (12).

3. Branche cinématique selon l'une quelconque des revendications 1 et 2, **caractérisée en ce que** l'essieu avant (VA; VA') est entraîné constamment.

4. Branche cinématique selon la revendication 3, **caractérisée en ce que** l'élément de sortie (18) de l'unité d'entraînement (12) est relié à un élément d'entrée d'un engrenage différentiel transversal (34), dont les éléments de sortie sont reliés à un arbre latéral gauche ou à un arbre latéral droit (36, 40) de l'essieu avant (VA).

5. Branche cinématique selon la revendication 4, **caractérisée en ce que** l'agencement d'accouplement à frottement (30; 30') est conçu sous forme d'accouplement de mise en circuit (30; 30') pour l'essieu arrière (HA), **en ce que** l'élément d'entrée de l'engrenage différentiel transversal (34) est relié également à un agencement d'arbre creux (42), qui est relié à un élément d'entrée (76) de l'accouplement de mise en circuit (30; 30'), et **en ce qu'**un élément de sortie (80) de l'accouplement de mise en circuit (30; 30') est relié à l'engrenage angulaire (28, 29).

6. Branche cinématique selon la revendication 5, **caractérisée en ce que** l'accouplement de mise en circuit (30; 30') est un accouplement à lamelles et **en ce que** l'élément d'entrée (76) de l'accouplement de mise en circuit (30; 30') est un support de lamelles extérieures (76).

7. Branche cinématique selon la revendication 5 ou 6, **caractérisée en ce que** l'accouplement de mise en circuit (30; 30') est un accouplement à lamelles et **en ce que** l'élément de sortie (80) de l'accouplement de mise en circuit (30; 30') est un support de lamelles intérieures (80).

8. Branche cinématique selon l'une quelconque des revendications 5 à 7, **caractérisée en ce que** l'élément de sortie (80) de l'accouplement de mise en circuit (30; 30') est relié par un autre agencement d'arbre creux (82) à l'engrenage angulaire (28, 29).

9. Branche cinématique selon l'une quelconque des revendications 4 à 8, **caractérisée en ce que** l'élément d'entrée de l'engrenage différentiel transversal est relié également à un agencement d'arbre creux (74'), qui est relié à un élément d'entrée (76') d'un accouplement de blocage transversal (48), et **en ce qu'**un élément de sortie (90) de l'accouplement de blocage transversal (48) est relié à l'un (40') des arbres latéraux de l'essieu avant (VA).

10. Branche cinématique selon les revendications 5 et 9, **caractérisée en ce que** l'accouplement de mise en circuit (30') et l'accouplement de blocage transversal (48) présentent un élément d'entrée (76') commun.

11. Branche cinématique selon l'une quelconque des revendications 1 et 2, **caractérisée en ce que** l'essieu arrière (HA") est entraîné constamment.

12. Branche cinématique selon la revendication 11, **caractérisée en ce que** l'élément de sortie (18) de l'unité d'entraînement (12) est relié par un agencement d'arbre creux (42") à l'engrenage angulaire (29").

13. Branche cinématique selon la revendication 12, **caractérisée en ce que** l'élément de sortie (18) de l'unité d'entraînement (12) est relié à un élément d'entrée de l'agencement d'accouplement à frottement (30"), qui est conçu sous forme d'agencement d'accouplement de mise en circuit (30") pour l'essieu avant (VA).

14. Branche cinématique selon la revendication 13, **caractérisée en ce que** l'agencement d'accouplement de mise en circuit (30") est formé par deux accouplements à frottement latéraux (52, 54), lesquels peuvent être actionnés indépendamment l'un de l'autre, les éléments de sortie (102, 104) des deux accouplements à frottement latéraux (52, 54) étant reliés à un arbre latéral gauche ou à un arbre latéral droit (36", 40") de l'essieu avant (VA").

15. Branche cinématique selon la revendication 14, **caractérisée en ce que** les accouplements à frottement latéraux (52, 54) sont conçus sous forme d'accouplements à lamelles (52, 54) et **en ce que** leur élément d'entrée (100) commun est formé par un support de lamelles extérieures (100).
